# EUROPÄISCHE PATENTSCHRIFT

(11) **EP 0 474 803 B1**
(45) Veröffentlichungstag und Bekanntmachung des Hinweises auf die Patenterteilung: **09.08.1995**
(21) Anmeldenummer: 91904222.6
(22) Anmeldetag: 01.03.1991
(51) Int. Cl.: F02D 41/22, F02M 25/08

(54) **TANKENTLÜFTUNGSANLAGE FÜR EIN KRAFTFAHRZEUG UND VERFAHREN ZUM ÜBERPRÜFEN DEREN FUNKTIONSTÜCHTIGKEIT**
VAPOUR VENTING SYSTEM FOR VEHICLE FUEL TANKS AND PROCESS FOR CHECKING SYSTEM OPERABILITY
DISPOSITIF D'AERATION DE RESERVOIR POUR VEHICULE A MOTEUR ET PROCEDE DE CONTROLE DE L'APTITUDE AU FONCTIONNEMENT DE CE DISPOSITIF

(30) Priorität: 30.03.1990 DE 4010171; 11.08.1990 DE 4025544
(43) Veröffentlichungstag der Anmeldung: 18.03.1992
(73) Patentinhaber: ROBERT BOSCH GMBH, 70442 Stuttgart (DE)
(72) Erfinder: STEINBRENNER, Ulrich, D-7000 Stuttgart 1 (DE); DENZ, Helmut, D-7000 Stuttgart 1 (DE); WILD, Ernst, D-7141 Oberriexingen (DE)
(86) Internationale Anmeldenummer: DE9100180
(87) Internationale Veröffentlichungsnummer: WO9115670

(56) Entgegenhaltungen:
- EP-A- 0 411 173
- DE-A- 3 008 320
- US-A- 4 700 750
- PATENT ABSTRACTS OF JAPAN vol. 12, no. 305 (M-733)(3152) 19 August 1988, & JP-A-63 080033 (TOYOTA MOTOR CORP) 11 April 1988
- RESEARCH DISCLOSURE no. 298, Februar 1989, HAVANT GB Seite 143, Disclosed anonymously: "Vapor Purge System"

## Beschreibung

Die Erfindung betrifft eine Tankentlüftungsanlage für ein Kraftfahrzeug und Verfahren zum Überprüfen der Funktionstüchtigkeit einer solchen Anlage.

### Stand der Technik

Eine Tankentlüftungsanlage weist generell einen Kraftstofftank und ein Tankentlüftungsventil auf, das mit dem Saugrohr einer Brennkraftmaschine verbunden ist, damit mit Hilfe des Unterdrucks im Saugrohr Kraftstoffdämpfe abgesaugt werden. Üblicherweise wird nicht unmittelbar das über dem Kraftstoff befindliche Volumen im Tank abgesaugt, sondern zwischen den Tank und das Tankentlüftungsventil ist ein Adsorptionsfilter, üblicherweise ein Aktivkohlefilter, zwischengeschaltet. Dieses Aktivkohlefilter adsorbiert Kraftstoff in denjenigen Zeiträumen, in denen kein Absaugen vom Saugrohr her erfolgt, z. B. beim Stillstand der Brennkraftmaschine oder dann, wenn aufgrund des aktuellen Betriebszustandes das Tankentlüftungsventil geschlossen gehalten wird.

Eine derartige Tankentlüftungsanlage, bei der mit Hilfe eines Kraftstofftemperaturfühlers und eines druckempfindlichen Schalters eine im Tank verflüchtigte Kraftstoffmenge ermittelt wird, ist aus der DE-OS 30 08 320 bekannt. Nach dieser Schrift wird der im Aktivkohlefilter adsorbierte Kraftstoff nur dann an die Brennkraftmaschine abgegeben, wenn die im Tank verflüchtigte Kraftstoffmenge einen vorbestimmten Wert überschreitet.

Es besteht die Gefahr, daß Tankentlüftungsanlagen undicht werden oder daß das Tankentlüftungsventil nicht ordnungsgemäß arbeitet. Derartige Anlagen sind daher während des Betriebs eines Kraftfahrzeugs wiederholt auf Funktionstüchtigkeit zu überprüfen.

Das wichtigste Verfahren zum Überprüfen der Funktionstüchtigkeit einer Kraftfahrzeug-Tankentlüftungsanlage beruht auf einem Vorschlag der kalifornischen Umweltbehörde CARB. Nach diesem Verfahren wird beim Öffnen des Tankentlüftungsventiles überprüft, ob ein Lambdaregler eine Korrektur in seinem Stellwert vornehmen muß. Dies ist immer dann der Fall, wenn aus der Tankentlüftungsanlage Luft mit Kraftstoffdampf angesaugt wird. Nun ist es jedoch so, daß das Adsorptionsfilter ganz regeneriert sein kann und daß der Kraftstoff im Tank völlig entgast ist. Dann wird beim Öffnen des Tankentlüftungsventils kein Kraftstoff zusätzlich zu demjenigen geliefert, der gemäß dem Stellwert der Lambdaregelung an die Einspritzventile der Brennkraftmaschine geliefert wird. In einem solchen Fall, in dem also kein Kraftstoff von der Tankentlüftungsanlage geliefert wird, also der Lambdaregler keine Korrektur vornehmen muß, ist unklar, ob die Tankentlüftungsanlage undicht ist oder ob aus den genannten Gründen kein Kraftstoff geliefert wird. Um diese Frage entscheiden zu können, erfolgt gemäß dem bekannten Verfahren eine Auswertung des Signals vom Lambdaregler nur dann, wenn ein Kraftstofftemperaturfühler das überschreiten einer vorgegebenen Kraftstoffmindesttemperatur anzeigt und ein Tankfüllstandssensor anzeigt, daß das Fahrzeug betankt wurde. Es wird davon ausgegangen, daß dann auf jeden Fall Kraftstoffdampf in der Anlage vorhanden sein müßte, der beim Öffnen des Tankentlüftungsventils angesaugt wird und dann zu einer Korrektur des Lambdareglers führt. Jedoch treten bei diesem Verfahren immer wieder Fehlentscheidungen auf, wenn sich nämlich ausgegaster Kraftstoff im Tank befindet, ebensolcher Kraftstoff nachgetankt wird und das Adsorptionsfilter weitgehend regeneriert ist.

Demgemäß bestand weiterhin das Problem, ein Verfahren zum Überprüfen der Funktionstüchtigkeit einer Kraftfahrzeug-Tankentlüftungsanlage anzugeben, das möglichst wenig unberechtigte Fehlermeldungen ausgibt. Außerdem bestand das Problem, eine Tankentlüftungsanlage anzugeben, deren Funktionstüchtigkeit sich besonders zuverlässig überprüfen läßt.

### Darstellung der Erfindung

Die erfindungsgemäße Tankentlüftungsanlage für ein Kraftfahrzeug weist folgende Teile auf:
- einen HC(Kohlenwasserstoff)-Sensor zum Erfassen des HC-Gehalts des Gases im Kraftstofftank,
- ein Adsorptionsfilter, das mit dem Kraftstofftank über eine Filterleitung verbunden ist,
- und ein Tankentlüftungsventil, das über eine Ventilleitung das Adsorptionsfilter mit dem Saugrohr einer Brennkraftmaschine verbindet.

Diese Anlage unterscheidet sich von bekannten Anlagen durch den HC-Sensor für den genannten Zweck. Mit dieser Anlage sind Vorteile erzielbar, wie sie weiter unten für ein Verfahren erläutert werden, das folgende Schritte aufweist:
- es wird ermittelt, ob sich HC(Kohlenwasserstoff)-Dampf im Tank befindet, und es wird wie folgt weiterverfahren, wenn dies der Fall ist,
- das Tankentlüftungsventil wird für eine vorgegebene Zeitspanne geschlossen, damit sich Kohlenwasserstoff im Adsorptionsfilter anreichern kann,
- und nach dem Öffnen des Tankentlüftungsventils wird überprüft, ob eine Lambdakorrektur in Richtung Mager erforderlich ist, und es wird auf Funktionsunfähigkeit der Anlage geschlossen, wenn keine derartige Korrektur erforderlich ist.

Der Klarstellung halber sei darauf hingewiesen, daß ein überprüfen, ob eine Lambdakorrektur in Richtung Mager erforderlich ist, nicht in allen Betriebszuständen einer Brennkraftmaschine erfolgen kann, sondern nur bei solchen, bei denen ein vorgegebener Luftdurchsatz nicht überschritten wird. Dies ist allgemein bekannt.

Das vorteilhafte Verfahren hat den Vorteil, daß ein überprüfen auf eine erforderliche Lambdakorrektur nur erfolgt, wenn durch das Ermitteln von HC-Dampf im Kraftstofftank und die Anreicherungsphase bei geschlossenem Tankentlüftungsventil sichergestellt ist, daß eine Korrektur erforderlich sein muß, wenn das Tankentlüftungsventil wieder geöffnet wird, vorausgesetzt, die gesamte Anlage ist dicht. Die Dichtheit der gesamten Anlage ist prüfbar, weil der HC-Sensor in der Dampfquelle, also im Tank, angeordnet ist. Wäre der HC-Sensor an einem anderen Ort angebracht, würde der Aussageumfang abnehmen. Um dies zu veranschaulichen, sei angenommen, der HC-Sensor befinde sich zwischen Tankentlüftungsventil und Saugrohr. Läßt sich nun das Tankentlüftungsventil nicht mehr öffnen oder ist die Anlage undicht, mißt der Sensor nie HC-Dampf, weswegen nie eine Prüfung auf Lambdakorrektur in Richtung Mager ausgeführt wird, so daß nie festgestellt werden kann, ob die Anlage noch funktionsfähig ist.

Das vorstehend genannte vorteilhafte Verfahren zum überprüfen der Funktionstüchtigkeit einer Tankentlüftungsanlage prüft auf Dichtheit der Anlage und Funktionsfähigkeit des Tankentlüftungsventils. Das im folgenden angegebene erfindungsgemäße Verfahren zum überprüfen der Funktionstüchtigkeit einer Tankentlüftungsanlage mit HC-Sensor überprüft die Funktion dieses Sensors, was z. B. neben einer elektrischen Prüfung erfolgt, die über Minimal- und Maximalwerte eines Plausibilitätsbereichs der Sensorkennlinie erfolgt. Es weist folgende Schritte auf:
- wenn der HC-Sensor kein Signal anzeigt, wird das Adsorptionsfilter gespült, um sicherzustellen, daß von diesem Filter kein HC-Dampf geliefert werden kann, der eine Lambdakorrektur in Richtung Mager erforderlich machen könnte,
- anschließend wird das Tankentlüftungsventil für eine vorgegebene Zeitspanne geschlossen, damit sich im Adsorptionsfilter wieder HC-Dampf anreichern könnte, falls solcher vom Tank geliefert würde, obwohl der HC-Sensor kein Signal anzeigt,
- und nach dem Öffnen des Tankentlüftungsventils wird überprüft, ob eine Lambdakorrektur in Richtung Mager erforderlich ist, und es wird auf Funktionsunfähigkeit des Sensors geschlossen, wenn eine solche Korrektur erforderlich ist.

Aus diesem Verfahrensablauf ist unmittelbar ersichtlich, daß sich die Funktionsfähigkeit des HC-Sensors einer erfindugnsgemäßen Tankentlüftungsanlage sehr einfach überprüfen läßt. Dieser Vorteil und die für das andere Verfahren genannten Vorteile zeigen, daß die erfindungsgemäße Tankentlüftungsanlage besonders funktionssicher ist.

### Zeichnung

Fig. 1 schematische Darstellung einer Tankentlüftungsanlage mit einem Kraftstofftank mit HC-Sensor;
Fig. 2 Flußdiagramm zum Erläutern eines Verfahrens zum Überprüfen der Dichtheit einer Kraftfahrzeug-Tankentlüftungsanlage und der Funktionsfähigkeit eines Tankentlüftungsventils in der Anlage; und
Fig. 3 Flußdiagramm zum Erläutern eines Verfahrens zum Überprüfen der Funktionstüchtigkeit des HC-Sensors in der Anlage gemäß Fig. 1.

### Beschreibung von Ausführungsbeispielen

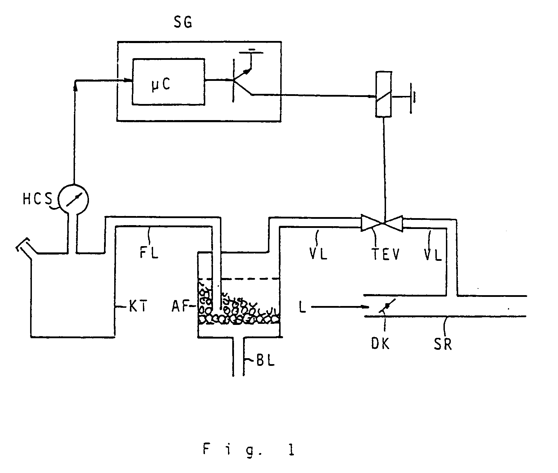

Fig. 1 zeigt schematisch eine Tankentlüftungsanlage mit einem Kraftstofftank KT, einem Adsorptionsfilter AF und einem Tankentlüftungsventil TEV. Letzteres liegt in einer Ventilleitung VL, die das Adsorptionsfilter AF mit dem Saugrohr SR einer nicht dargestellten Brennkraftmaschine verbindet. Die Ventilleitung mündet in Strömungsrichtung L angesaugter Luft hinter der Drosselklappe. Dadurch ist es möglich, einen relativ hohen Unterdruck in der Ventilleitung zu erzielen, um dadurch das Adsorptionsfilter AF wirksam mit Luft zu spülen, die durch eine Belüftungsleitung BL angesaugt wird und die durch das adsorbierende Material, in der Regel Aktivkohle, strömt. Das Adsorptionsfilter AF ist mit dem Kraftstofftank KT über eine Filterleitung FL verbunden. Gast der Kraftstoff im Tank, wird der ausgasende HC-Dampf im Adsorptionsfilter AF adsorbiert.

Die in Fig. 1 dargestellte Tankentlüftungsanlage weist außer den bisher beschriebenen bekannten Bauteilen noch einen HC-Sensor HCS auf, der im Kraftstofftank KT oder an dessem Ausgang angeordnet ist. Der HC-Sensor HCS liefert sein Meßsignal an einen Mikrocomputer in einem Steuergerät SG. Dieses Steuergerät gibt Signale zum Ansteuern des Tankentlüftungsventiles TEV aus. Dabei erfolgt das Öffnen der Ansteuerung des Tankentlüftungsventils in der Regel mit einem vorgegebenen Tastverhältnis. Wenn im folgenden von einem geöffneten Tankentlüftungsventil die Rede ist, ist demgemäß hierunter jeweils ein Zustand zu verstehen, in dem das Tankentlüftungsventil mit einem vorgegebenen Tastverhältnis angesteuert wird.

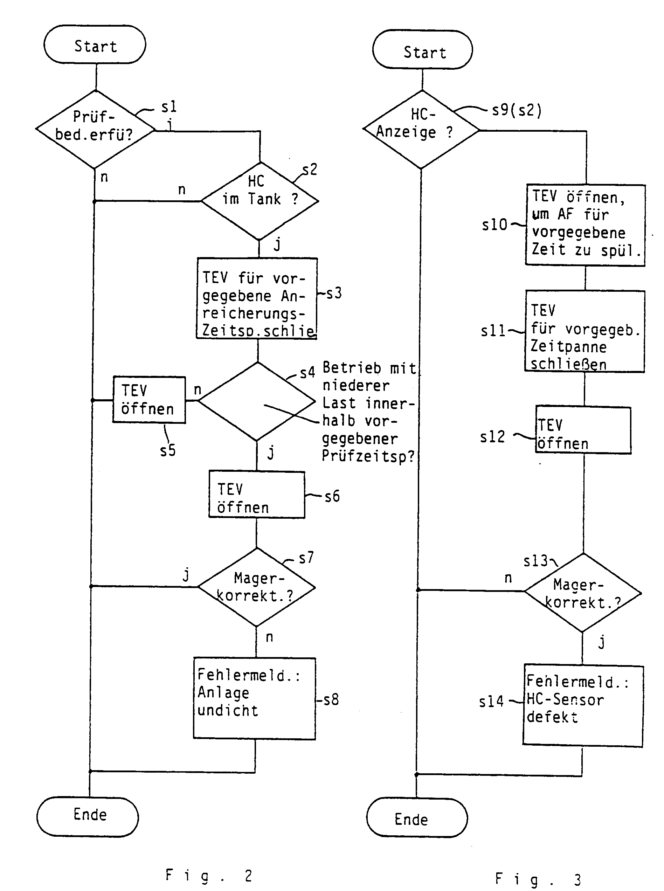

Das Steuergerät SG erhält noch Signale, die zu einer Lambdaregelung erforderlich sind, und es gibt Stellwerte zur Lambdaregelung aus. Dies ist in Fig. 1 nicht veranschaulicht. Die Lambdaregelungssignale werden zusammen mit Signalen vom HC-Sensor in einer Art und Weise genutzt, wie sie im folgenden anhand der Fig. 2 und 3 veranschaulicht wird.

Beim Verfahren gemäß Fig. 2 zum Überprüfen der Dichtheit der Tankentlüftungsanlage gemäß Fig. 1 und der Funktionsfähigkeit des Tankentlüftungsventils wird in einem Schritt s1 untersucht, ob eine Prüfbedingung erfüllt ist. Die Prüfbedingung kann z. B. das Erfordernis sein, daß seit einem letzten Abarbeiten des Verfahrens eine vorgegebene Zeitspanne abgelaufen ist. Die Prüfbedingung kann auch im Vorliegen eines Betriebszustandes einer Last unterhalb einem vorgegebenen Schwellenwert bestehen. Ist die Prüfbedingung nicht erfüllt, wird unmittelbar das Ende des Verfahrens erreicht. Andernfalls erfolgt die eigentliche Prüfung. Hierzu wird in einem Schritt s2 überprüft, ob sich HC-Dampf im Kraftstofftank KT befindet. Ist dies nicht der Fall, wird wiederum das Ende des Ablaufs erreicht. Befindet sich jedoch HC-Dampf im Tank, wird in einem Schritt s3 das Tankentlüftungsventil TEV für eine vorgegebene Anreichungs-Zeitspanne geschlossen. Diese soll sicherstellen, daß im Adsorptionsfilter ausreichend Kraftstoffdampf angereichert werden kann, um in einem weiteren Schritt überprüfen zu können, ob eine Lambdakorrektur in Richtung Mager erforderlich ist. Eine solche Prüfung ist allerdings nur möglich, wenn ein Betriebszustand mit einer Last unterhalb einer vorgegebenen Lastschwelle vorliegt. In einem folgenden Schritt s4 wird daher das Vorliegen eines solchen Zustandes abgefragt. Tritt ein solcher Zustand nicht innerhalb einer vorgegebenen Prüf-Zeitspanne auf, wird das Tankentlüftungsventil TEV in einem Schritt s5 wieder geöffnet, um sicherzustellen, daß das Adsorptionsfilter AF wieder gespült wird.

Die Anreicherungs-Zeitspanne gemäß Schritt s3 wie auch die Prüf-Zeitspanne gemäß Schritt s4 betrugen bei einem Ausführungsbeispiel jeweils 30 Sekunden. Diese vorgegebenen Zeitspannen können jedoch in relativ weiten Grenzen variieren, abhängig von der Gesamtkonstruktion der Anlage und der Art der Brennkraftmaschine, die die Anlage nutzt. Aus diesen beiden Zeitspannen ergibt sich für die Schließzeit des Tankentlüftungsventils eine Minimalzeitspanne von 30 Sekunden und eine Maximalzeitspanne von 60 Sekunden. Folgt nach den 60 Sekunden Schritt s5, da kein für die weitere Prüfung geeigneter Betriebszustand eintrat, wird mindestens für einige Minuten gespült, bevor Schritt s1 wieder in den Prüfablauf umschalten kann. Hierdurch wird ein Übersättigen des Adsorptionsfilters vermieden.

Ergibt die Überprüfung in Schritt s4, daß ein Betriebszustand bei Beginn der Zeitspanne vorliegt oder während des Laufens der Zeitspanne eintritt, wird ab dem Zeitpunkt des Feststellens des Erfülltseins der Bedingung das Tankentlüftungsventil geöffnet (Schritt s6), und es wird untersucht, ob eine Lambdakorrektur in Richtung Mager erforderlich ist (Schritt s7). Erwartet wird eine solche Korrektur, da ja HC-Dampf, also Kraftstoffdampf im Tank gemessen wurde (Schritt s2) und solcher Dampf angereichert wurde, so daß solcher Dampf in das Saugrohr SR (Fig. 1) eingesaugt werden muß, wenn das Tankentlüftungsventil geöffnet wird, vorausgesetzt, die Anlage ist dicht und das Tankentlüftungsventil öffnet sich tatsächlich, wenn es mit einem entsprechenden Signal angesteuert wird. Tritt der erwartete Fall der Lambdakorrektur in Richtung Mager ein, führt Schritt s7 zum Ende des Verfahrens. Andernfalls wird vor Erreichen des Verfahrensendes in einem Schritt s8 eine Fehlermeldung ausgegeben, die anzeigt, daß die Anlage undicht ist oder das Tankentlüftungsventil sperrt. Die Fehlermeldung kann optisch und/oder akustisch angezeigt werden, und sie kann zur automatischen Fehlerdiagnose abgespeichert werden.

Aus dem eben beschriebenen Ablauf ist erkennbar, daß Detailuntersuchungen zur Funktionstüchtigkeit der Tankentlüftungsanlage nur ausgeführt werden können, wenn der HC-Sensor HCS meldet, daß sich HC-Dämpfe im Tank befinden (Schritt s2). Ist der HC-Sensor defekt, kann er eine solche Meldung nicht ausgeben, was zur Folge hätte, daß die eben beschriebene Prüfung nie ausgeführt würde und daher mangels Fehlermeldung (Schritt s8) dauernd angenommen würde, die Anlage sei in Ordnung. Um diesen Mangel zu umgehen, wird die Funktionsfähigkeit des HC-Sensors vorteilhafterweise mit einem Verfahren überprüft, wie es durch Fig. 3 veranschaulicht ist.

Bei dem durch Fig. 3 veranschaulichten Verfahren wird zunächst in einem Schritt s9 überprüft, ob eine Anzeige auf HC-Dämpfe im Kraftstofftank vorliegt. Ist dies der Fall, wird unmittelbar das Ende des Verfahrens erreicht. Andernfalls folgt der eigentliche Prüfablauf zum Ermitteln, ob der HC-Sensor funktionsfähig ist. Es sei darauf hingewiesen, daß die in Schritt s9 überprüfte Bedingung mit derjenigen Bedingung übereinstimmt, wie sie im weiter oben erläuterten Schritt s2 überprüft wird. Daraus folgt, daß das Verfahren gemäß Fig. 3 ohne weiteres in den Verfahrensablauf gemäß Fig. 2 integrierbar ist. In diesem Fall folgt bei Erfülltsein der Bedingung der HC-Anzeige der Ablauf mit den Schritten s3 bis s8, andernfalls der Ablauf zur konkreten Überprüfung der Funktionsfähigkeit des HC-Sensors.

Ergibt die Überprüfung auf HC-Anzeige (Schritt s9 oder Schritt s2), daß keine HC-Dampfkonzentration über einem vorgegebenen Schwellenwert vorliegt, wird mit Schritten s10 bis s13 untersucht, ob diese Aussage nicht davon herrührt, daß der HC-Sensor defekt ist. Hierzu wird zunächst (Schritt s10) das Tankentlüftungsventil TEV für eine vorgegebene Zeitspanne geöffnet, die mit Sicherheit ausreicht, das Absorptionsfilter AS so weit zu spülen, daß dieses keinen Kraftstoffdampf in solcher Menge mehr liefert, die eine Lambdakorrektur in Richtung Mager erforderlich machen würde. Hierbei ist vorausgesetzt, daß vom Tank entsprechend der Anzeige des HC-Sensors kein Kraftstoffdampf nachgeliefert wird. Ist die genannte Zeitspanne abgelaufen, wird das Tankentlüftungsventil für eine vorgegebene Zeitspanne geschlossen (Schritt s11). Ist die Anzeige des HC-Sensors korrekt, daß kein Kraftstoffdampf einer Konzentration über einem Schwellenwert im Tank vorliegt, wird in dieser Zeitspanne im Adsorptionsfilter kein Kraftstoffdampf angereicht werden. Ist die Anzeige jedoch falsch, liegt also entgegen der Aussage des HC-Sensors doch Kraftstoffdampf über einer vorgegebenen Konzentration vor, erfolgt ein Anreichern des Dampfes im Adsorptionsfilter. Wird nun das Tankentlüftungsventil geöffnet (Schritt s12) und überprüft, ob eine Lambdakorrektur in Richtung Mager erforderlich ist (Schritt s13), bestehen zwei Möglichkeiten. Die eine ist die, daß der HC-Sensor richtig angezeigt hat, daß demgemäß kein Anreichern von Kraftstoff erfolgte, und daß demgemäß auch keine Lambdakorrektur erforderlich ist. Es wird dann das Ende des Verfahrens erreicht. Ist jedoch eine Lambdakorrektur in Richtung Mager erforderlich, zeigt dies, daß vom Tank doch Kraftstoffdampf geliefert wurde, obwohl der HC-Sensor anzeigte, daß keine Konzentration vorliegt, die ausreichen würde, um zu einem Anreichern zu führen, das beim genannten Ablauf eine Lambdakorrektur in Richtung Mager erforderlich macht. Es wird dann eine Fehlermeldung ausgegeben (Schritt s14), die anzeigt, daß der HC-Sensor defekt ist. Diese Anzeige kann wiederum optisch und/oder akustisch erfolgen, und sie kann zur Fehlerdiagnose abgespeichert werden.

Die beschriebene Vorrichtung, wie auch die beschriebenen Verfahren, nutzen einen HC-Sensor im Tank. Bei den Verfahren werden verschiedene Prüfbedingungen und Zeitspannen genutzt, für die Beispiele angegeben wurden. Die Bedingungen und Werte der Zeitspannen lassen sich leicht variieren, was erläutert wurde. Von Bedeutung ist, daß für die Messungen entweder Zustände eingestellt werden, bei denen bei funktionsfähiger Anlage aufgrund des Signals vom HC-Sensor im Tank eindeutig mit einem Liefern von Kraftstoff aus der Tankentlüftungsanlage zu rechnen ist oder eindeutig nicht mit einem solchen Liefern zu rechnen ist.

Das Verfahren gemäß Fig. 2 nutzt als Sensor, der zusätzlich zum Grundaufbau einer Tankentlüftungsanlage vorhanden ist, nur den im Tank angeordneten HC-Sensor. Demgegenüber weist die eingangs beschriebene bekannte Anlage zwei zusätzliche Sensoren auf. Obwohl bei der vorstehend beschriebenen Anlage nur der HC-Sensor anstelle der herkömmlichen zwei Sensoren verwendet wird, ist dennoch ein Überprüfungsverfahren ausführbar, das höhere Aussagezuverlässigkeit in bezug auf Funktionstüchtigkeit der Anlage zuläßt als bekannte Verfahren.

## Patentansprüche

1. Tankentlüftungsanlage für ein Kraftfahrzeug, mit
- einem Kraftstofftank (KT),
- einem Adsorptionsfilter (AF), das mit dem Kraftstofftank über eine Filterleitung (FL) verbunden ist,
- und einem Tankentlüftungsventil (TEV), das über eine Ventilleitung (VL) das Adsorptionsfilter mit dem Saugrohr (SR) einer Brennkraftmaschine verbindet,
gekennzeichnet durch einen HC-Sensor (HCS), der den HC-Gehalt des Gases im Kraftstofftank (KT) erfaßt.

2. Verfahren zum Überprüfen der Funktionstüchtigkeit eines HC-Sensors, der den HC-Gehalt des Gases im Tank (KT) einer Kraftfahrzeugtankentlüftungsanlage erfaßt, bei der der Kraftstofftank über ein Adsorptionsfilter (AF) und ein Tankentlüftungsventil (TEV) dem Saugrohr (SR) einer Brennkraftmaschine verbunden ist, bei welchem Verfahren
- das Adsorptionsfilter gespült wird, wenn der HC-Sensor kein Vorliegen von Kohlenwasserstoffdampf über einer Schwellenkonzentration anzeigt,
- anschließend das Tankentlüftungsventil für eine vorgegebene Zeitspanne geschlossen wird,
- und nach dem Öffnen des Tankentlüftungsventils überprüft wird, ob eine Lambdakorrektur in Richtung mager erforderlich ist, und auf Funktionsunfähigkeit des Sensors geschlossen wird, wenn eine solche Magerkorrektur erforderlich ist.

## Claims

1. Vapour venting system for a motor vehicle, having
- a fuel tank (KT),
- an adsorption filter (AF) which is connected to the fuel tank via a filter line (FL),
- and a vapour venting valve (TEV) which connects the adsorption filter to the intake manifold (SR) of an internal combustion engine via a valve line (VL),
characterized by a hydrocarbon sensor (HCS) which detects the hydrocarbon content of the gas in the fuel tank (KT).

2. Method for checking the operational capability of a hydrocarbon sensor which senses the hydrocarbon content of the gas in the tank (KT) of a motor vehicle vapour venting system in which the fuel tank is connected to the intake manifold (SR) of an internal combustion engine via an adsorption filter (AF) and a vapour venting valve (TEV), in which method
- the adsorption filter is rinsed when the hydrocarbon sensor indicates no presence of hydrocarbon vapour above a threshold of concentration,
- subsequently the vapour venting valve is closed for a prescribed time period,
- and after the opening of the vapour venting valve it is checked whether a lambda correction to give a leaner mixture is necessary and the sensor is concluded to be operationally incapable if such a correction to give a leaner mixture is required.

## Revendications

1. Installation de ventilation de réservoir de véhicule automobile, comprenant :
- un réservoir de carburant (KT),
- un filtre d'adsorption (AF) relié au réservoir de carburant par une conduite de filtre (FL),
- et une soupape de ventilation de réservoir (TEV) qui relie, par une conduite de ventilation (VL), le filtre d'adsorption à la tubulure d'aspiration (SR) du moteur à combustion interne,
caractérisé par un capteur d'hydrocarbures (HCS) qui détecte la teneur en hydrocarbures (HC) du gaz dans le réservoir de carburant (KT).

2. Procédé de contrôle de l'aptitude au fonctionnement d'un capteur d'hydrocarbures qui détecte la teneur en hydrocarbures (HC) du gaz dans le réservoir (KT) d'une installation de ventilation du réservoir de carburant d'un véhicule automobile, selon lequel le réservoir de carburant est relié par un filtre d'adsorption (AF) et une soupape de ventilation de réservoir (TEV) avec la tubulure d'aspiration (SR) d'un moteur à combustion interne, procédé selon lequel
- on rince le filtre d'adsorption lorsque le capteur d'hydrocarbures n'affiche aucune présence de vapeurs d'hydrocarbures dépassant un seuil de concentration,
- puis on ferme la soupape de ventilation du réservoir pendant une durée prédéterminée,
- et après l'ouverture de la soupape de ventilation du réservoir on contrôle si une correction lambda est nécessaire dans le sens d'un mélange pauvre, et on conclut à l'aptitude au fonctionnement du capteur si une telle correction dans le sens du mélange pauvre est nécessaire.
